# NEUE EUROPÄISCHE PATENTSCHRIFT

(11) **EP 1 862 061 B2**
(45) Veröffentlichungstag und Bekanntmachung des Hinweises auf die Entscheidung über den Einspruch: **10.10.2018**
(45) Hinweis auf die Patenterteilung: 02.03.2016
(21) Anmeldenummer: 07103433.4
(22) Anmeldetag: 02.03.2007
(51) Int. Cl.: A01F 29/22

(54) **Landwirtschaftliche Erntemaschine**
Agricultural harvester
Moissonneuse agricole

(30) Priorität: 29.05.2006 DE 102006025224
(43) Veröffentlichungstag der Anmeldung: 05.12.2007
(73) Patentinhaber: CLAAS Saulgau GmbH, 88348 Bad Saulgau (DE)
(72) Erfinder: Pollklas, Manfred, 33378, Rheda-Wiedenbrück (DE); Rauch, Hans, 88348, Bad Saulgau (DE)

(56) Entgegenhaltungen:
- EP-A- 1 522 214
- EP-A1- 1 386 534
- EP-A1- 1 386 534
- DE-A1- 4 023 113
- DE-A1- 4 023 113
- DE-A1- 4 023 114
- DE-C1- 19 903 153
- NEW HOLLAND OPERATOR'S MANUAL FOR PRE-SERIES FX FORAGE HARVESTERS, 1994
- BROSCHüRE, NEW HOLLAND SELF PROPELLED FORAGE HARVESTERS MODELS FX30, FX40, FX50 AND FX60, SEPTEMBER 2004
- BROSCHüRE, NEW HOLLAND SELF-PROPELLED FORAGE HARVESTERS MODELS FX300, FX375 AND FX450, MARCH 1998
- ABBILDUNG ELECTRONIC SERVICE TOOL - NEW HOLLAND - FX ZELFAANGEDREVEN HAKSELAARS
- ABBILDUNG CAL_PDT.C PROPERTIES MIT QUELLCODE
- BROSCHüRE, MENGELE MAMMUT, 1997
- WIKIPEDIA, MENGELE AGRARTECHNIK COMPANY

## Beschreibung

Die Erfindung betrifft eine landwirtschaftliche Erntemaschine, insbesondere einen selbstfahrenden Feldhäcksler mit einer Häckselmesser aufweisenden Häckseltrommel, einer der Häckseltrommel zugeordneten Schleifvorrichtung mit einem Schleifwerkzeug zum Schleifen der Häckselmesser nach dem Oberbegriff des Anspruchs 1.

Während des Arbeitsprozesses des Feldhäckslers nutzen sich die an der Häckseltrommel befestigten Messer mit zunehmender Betriebsdauer ab. Die Intensität der Abnutzung ist dabei u.a. abhängig von Erntegutparametern und vom Verschmutzungsgrad des Erntegutes. Dabei erfolgt das notwendige Nachschleifen der Messer nach dem Erreichen eines vordefinierten Abnutzungsgrades mit im Stand der Technik bekannten Schleifvorrichtungen, die einerseits manuell oder voll automatisch betrieben und gesteuert werden können.

In der DE 199 03 153 C wird vorgeschlagen, die Schleifintervalle in Abhängigkeit vom Verschleißzustand einzelner Häckselmesser, erfasst durch die Messung der Belastung der Gegenschneide entgegen der Flussrichtung des Gutstroms und quer zur Flussrichtung des Gutstroms, zu regeln. Falls der ermittelte Verschleißzustand auf stumpfe Messer hinweist, wird dem Benutzer eine entsprechende Mitteilung gemacht bzw. selbsttätig der Gutfluss gestoppt oder die Gegenschneide verstellt oder ein Schleifvorgang eingeleitet.

Die DE 103 57 177 A1 offenbart eine Schleifvorrichtung einer Häckseleinrichtung eines Feldhäckslers, wobei die Schleifintervalle zur Schärfung der Häckselmesser hierbei in Abhängigkeit von der Betriebsdauer der Häckselmesser bestimmt werden.

Die EP 1 386 543 A1 offenbart ein Verfahren und eine Anordnung zum Bestimmen der Schärfe von Häckselmessern. Gemäß dem Verfahren wird vor Beginn der Häckselarbeiten, das heißt des Ernteprozesses, eine Referenzmessung durchgeführt, deren Messergebnis während der Häckselarbeiten mit in zeitlichen Intervallen vorgenommen Folgemessungen verglichen wird. Bei Überschreiten eines Schwellwertes der Abweichung von dem Messergebnis der Referenzmessung wird dem Fahrer optisch signalisiert, dass die Schärfe einen kritischen Zustand angenommen hat. Der Fahrer sieht diesen optischen Hinweis und stoppt die Häckselarbeiten, das heißt den Ernteprozess. Der Fahrer betätigt daraufhin die Schleifvorrichtung. Nach dem Abschluss des Schleifvorganges setzt der Fahrer die Häckselarbeiten fort.

Nachteilig an allen bisherigen Ausführungsformen ist, dass nicht auszuschließen ist, dass zum Nachschleifen der Messer, der Arbeitsbetrieb des sich im Ernteprozess befindenden Feldhäckslers unterbrochen werden muss, welches unter Umständen zu erheblichen Zeitverlusten im Ernteprozess führen kann und daneben eine zusätzliche Beanspruchung des Bedieners des Feldhäckslers erfolgt, der während des Ernteprozesses ohnehin viele weitere Funktionen steuern und aktivieren muss.

Es ist daher Aufgabe der Erfindung, die Nachteile des zitierten Standes der Technik zu vermeiden und einen möglichst ununterbrochenen Erntebetrieb zu ermöglichen, bei gleichzeitiger Entlastung des Bedieners der landwirtschaftlichen Erntemaschine.

Diese Aufgabe wird erfindungsgemäß durch das kennzeichnende Merkmal des Patentanspruchs 1 gelöst, wobei in den weiteren Patentansprüchen Merkmale aufgeführt sind, die diese Lösung in vorteilhafter Weise weiterentwickeln.

Indem der Schleifvorgang zum Schleifen der Häckselmesser aktiviert wird, wenn sich die landwirtschaftliche Erntemaschine während des Ernteprozesses in einem Nichtarbeitsbetrieb befindet, kann vorteilhaft dieser ohnehin während des Erntebetriebes vorhandene Zeitraum, genutzt werden, um den Schleifvorgang der Häckselmesser durchzuführen, so dass der Ernteprozess nicht zusätzlich zum Schleifen der Häckselmesser unterbrochen werden muss.

Der Nichtarbeitsbetrieb definiert sich als Vorgewende und/oder Feldendefahrt, so dass dieser im Ernteprozess sich zwangsläufig wiederholende Nichtarbeitsbetriebszeitraum der Erntemaschine genutzt werden kann, um den Schleifvorgang zum Schleifen der Häckselmesser durchzuführen, wodurch ein effizienterer Einsatz der Erntemaschine im Ernteprozess erreicht wird.

Gemäß der Erfindung ist dieser Vorgang in ein vorhandenes Vorgewende-Management-System, auch als Headland-Management-System bekannt, integriert, wobei das aktive Vorgewende-Management-System den Schleifvorgang, während die Erntemaschine das Vorgewende und/oder das Feldende durchfährt, automatisch aktiviert. Neben dem Effekt den Zeitraum des Nichtarbeitsbetriebes der Erntemaschine zum Schleifen der Häckselmesser zu nutzen, erfährt der Fahrer zudem eine Entlastung.

In vorteilhafter Weiterbildung der Erfindung ist eine Steuereinrichtung zur Steuerung des Antriebes der Schleifvorrichtung vorhanden, wobei die Steuereinrichtung den Antrieb der Schfeifvorrichtung in Abhängigkeit eines Nichtarbeitsbetriebs- ober Arbeitsbetriebssignals vorzugsweise automatisch ansteuert. Dadurch kann vorteilhaft der Prozess des Schleifens der Häckselmesser im Ernteprozess insgesamt automatisiert werden.

Indem das Nichtarbeitsbetriebs- bzw. Arbeitsbetnebssigrtat automatisch erfasst oder vorgegeben wird, kann einerseits vorteilhaft ein Versäumen der Aktiviering des Antriebs der Schleifvorrichtung zum Schleifen der Häckselmesser durch den Bediener der landwirtschaftlichen Erntemaschine verhindert werden. Andererseits hat der Bediener stets die Möglichkeit den Antrieb der Schleifvorgang selbsttätig 1,4 zu aktivieren, um die Aktivierung des Schieifvorgangs an unter-schiedliche Erntebedingungen bzw. an die Abnutzung der Häckselmesser anpassen zu können.

In vorteilhafter Ausgestaltung der Erfindung ist die Steuereinrichtung in einem Hilfs- und einem Hauptmodus betreibbar, wobei im Hilfsmodus mittels des Antriebes die Schleifvorrichtung in eine vorgebare Grundstellung gebracht und-fixiert wird und im Hauptmodus mittels des Antriebs die Stellung der Schleifvorrichtung so gesteuert bzw. geregelt wird, dass ein Schleifvorgang vollzogen wird,

Dadurch, dass die Steuereinrichtung beim Vorliegen eines Nichtarbeitsbetriebssignales im Hauptmodus, beispielhaft während Rangierarbeiten oder während einer Pause, betrieben wird, wird vorteilhaft sichergestellt, dass zum Schleife der Häckselmesser der Arbeitsbetrieb der landwirtschaftlichen Erntemaschine nicht unterbrochen werden muss. Demgegenüber wird die Steuereinrichtung beim Vorliegen eines Arbeitsbetriebssignals im Hilfsmodus betrieben, so dass dann ein störungsfreier Arbeitsbetrieb der landwirtschaftlichen Erntemaschine gewährleistet wird.

Damit sichergestellt ist, dass im Straßenverkehr kein anderer Teilnehmer, wie auch der Bediener der landwirtschaftlichen Erntemaschine selbst, durch den Schäeifvorgang beeinträchtigt bzw. in seiner Aufmerksamkeit abgelenkt wird und dadurch Unfälle entstehen können, kann die Steuereinrichtung nicht im Hauptmodus betrieben werden, wenn sich die landwirtschaftliche Erntemaschine im Straßenverkehr befindet.

Indem der Ablauf des Hauptmodus und/oder des Hilfsmodus der Steuereinrichtung vorgegeben wird oder frei programmierbar ist, wird einerseits der unerfahrene Bediener entlastet und Fehlabäufe vermieden, andererseits wird sichergestellt, dass ein erfahrener Bediener die Abläufe den jeweiligen aktuellen Erntebedingungen entsprechend anpassen kann.

In einer vorteilhaften Ausgestaltung der Erfindung ist ein mit der Steuereinrichtung verbundener Sensor auf der Erntemaschine angeordnet, wobei der Sensor geeignet ist, zu erkennen, ob sich die landwirtschaftliche Erntemaschine während des Ernteprozesses in einem Arbeits- oder Nichtsarbeitsbetrieb befindet und geeignet ist, ein entsprechendes Arbeitbetriebs- oder ein Nichtarbeitsbetriebssignal zu generieren, wodurch die Automatisierung des Schleifprozesses während des Erntprozesses stetes gewährleistet ist. Vorzugsweise handelt es sich bei dem Sensor um eine Bildkamera oder ein Laserscanner, wodurch vorausschauend feststellbar ist, wann sich die landwirtschaftliche Erntemaschine im Arbeitsbetrieb bzw. im Nichtarbeitsbetrieb befindet.

Weitere vorteilhaft Ausgestaltungen sind Gegenstand weiterer Unteransprüche und nachfolgend anhand von Zeichnungen näher erläutern.

Es zeigen:
- Figur 1:: einen selbstfahrenden Feldhäcksler mit einem Vorsatzgerät und einer Schteifvorrichtung in Seitenansicht und Schnittdarstellung
- Figur 2:: einen selbstfahrenden Feldhäcksler im Ernteprozess während einer Vorgewendefahrt in Draufsicht

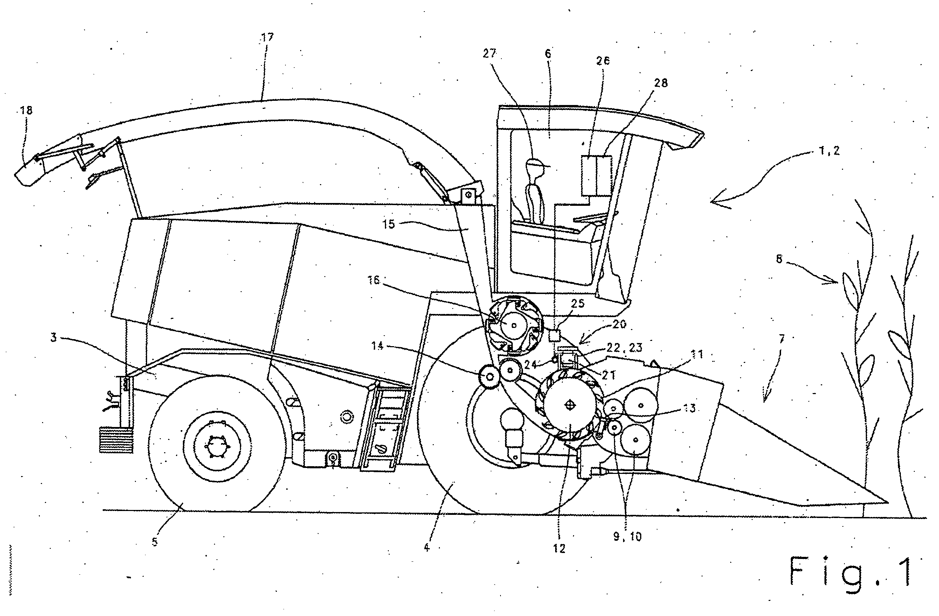

Figur 1 zeigt eine als selbstfahrender Feldhäcksler 1 ausgeführte landwirtschaftliche Erntemaschine 2 in Seitenansicht und Schnittdarstellung, Diese baut sich auf einen Rahmen 3 auf, der von vorderen und rückwärtigen Rädern 4, 5 getragen wird. Die Bedienung des Feldhäcksler 1 erfolgt von der Fahrerkabine 6 aus, von der aus, das dem Feldhäcksler 1 frontseitig zugeordnete Vorsatzgerät 7 einsehbar ist, welches im Arbeitsbetrieb des Feldhäckslers 1 Erntegut 8 aufnimmt, schneidet und es den nachgeordneten Einzugs- und Vorpresswalzen 9, 10 zuführt. Die Einzugs- und Vorpresswalzen 9, 10 leiten das Erntegut 8 der nachgeordneten und rotierenden, mit Messern 11 besetzten Häckseltrommel 12 zu, welche das Erntegut 8 an einer Gegenschneide 13 zerkleinert. Das zerkleinerte Erntegut 8 wird sodann an eine Nachzerkleinerungseinrichtung 14 über-geben, die die Erntegutkörner, wie beispielsweise Mais, anschlägt und über einen Förderschacht 15 an einen Nachbeschleuniger 16 übergibt. Der Nachbeschleuniger 16 beschleunigt das zerkleinerte Erntegut 8 und fördert es über einen horizontal und vertikal verstellbaren Auswurfkrümmer 17 und eine diesem verschwenkbar zugeordnete Auswurfkrümmerklappe 18 zur Regelung der Ernstgutstrahlweite auf eine nicht abgebildete, dem Auswurfkrümmer 17 zugeordnete Transportvorrichtung.

Um nach einer definierbaren Betriebsdauer die Messer 11 der Häckseltrommel 12 schärfen zu können, ohne den Ausbau der einzelnen Messer 11 bzw. den Ausbau der Häckseltrommel 12 insgesamt vornehmen zu müssen, ist oberhalb der Häckseltrommel 12 eine an sich bekannte Schleifvorrichtung 20 vorgesehen, die im Wesentlichen einen Schleifstein 21, eine diesem zugeordnete Schieifsteinhalterung 22 und eine Laufachse 23 umfasst, auf der die Schleifvorrichtung verschiebbar gelagert ist, sowie ein an sich bekannter Antrieb 24 zum Betreiben der Schleifvorrichtung 20. Dem Antrieb 24 der Schleifvorrichtung 20 ist zu dessen Steuerung eine Steuereinrichtung 25 zugeordnet. Ein Schleifvorgang kann dabei wie in der DE 41 28 483 C2 beschrieben ablaufen. Die Steuereinrichtung 25 ist dabei in einem Hilfsmodus oder in einem Hauptmodus betreibbar, wobei im Hilfsmodus die Schleifvorrichtung 20 in ihre Ausgangsstellung gebracht und fixiert wird und im Hauptmodus die Schieifvorrichtung 20 zum Schleifen der Häckselmesser 11 betrieben wird.

Erfindungsgemäß wird nun der Schleifvorgang zürn Schleifen der Häckselmesser 11 aktiviert, wenn sich die landwirtschaftliche Erntemaschine 2 während des Ernteprozesses in einem Nichtarbeitsbetrieb befindet, wobei der Nichtarbeitsbetrieb insbesondere als Vorgewendefahrt und/oder Feldendefahrt der landwirtschaftlichen Erntemaschine 2 definiert ist, Im Weiteren kann der Schleifvorgang in ein vorhandenes an sich bekanntes auch als Headiand-Management-System bekannt, integriert sein und durch ein solches aktiviert werden. Dabei werden beim erstmaligen Erreichen eines Vorgewendesektors im sog. Lernmodus alle Daten bzw. Arbeitstakte über die Bedieneinrichtung 26 durch den Bediener 27 der landwirtschaftlichen Erntemaschine 2 erfasst und im dafür vorgesehenen Bordrechner 28 gespeichert. Insbesondere werden die Daten zur Fahrstrecke, d.h. der zurückgelegte Weg, die Betätigung der Lenkung, die Fahrweise, d.h. die gefahrene Geschwindigkeit, Geschwindigkeitsänderungen, die Reduzierung der Geschwindigkeit, die Drehzahl der Häckseltrommel, die Stellung des Vorsatzgerätes gespeichert und ausgewertet. Zur Optimierung und Kontrolle wird vorzugsweise auch ein zweiter oder weitere Wendevorgänge in gleicher Art und Weise gespeichert und ausgewertet. Dieser optimierte Wendevorgang ist dann beliebig oft bei Aktivierung des Vorgewende-Management-Systems mittels eines dafür vorgesehenen hier nicht dargestellten Schalters automatisch wiederholbar. Der Bediener 27 kann jedoch über die Bedieneinrichtung 26 manuell in den automatischen Vorgewende-Ablauf eingreifen, um bei unvorhersehbaren Störungen, Abhilfe schaffen zu können.

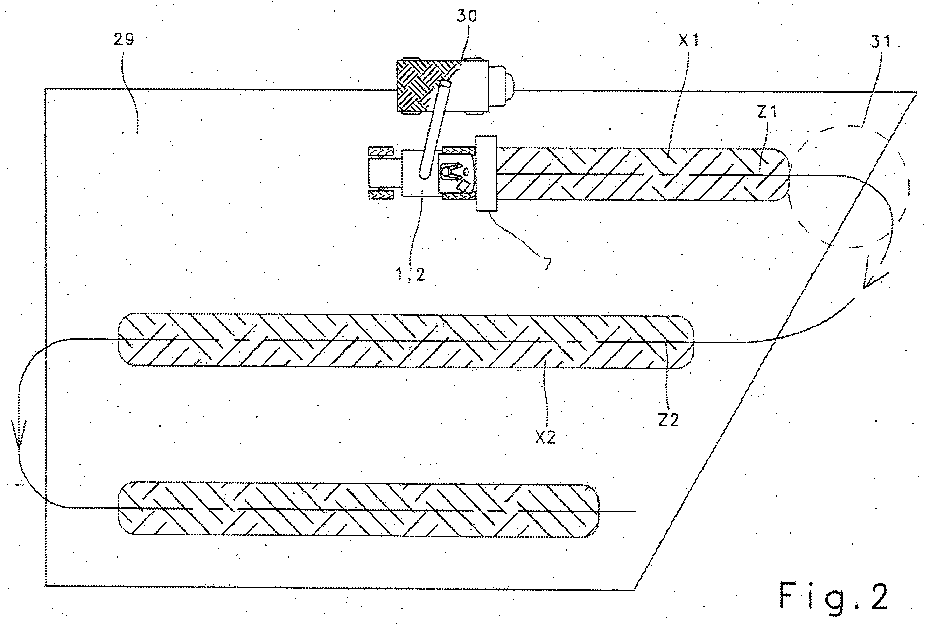

Figur 2 zeigt einen Feldhäcksler 1, der ein nicht dargestelltes Vorgewende-Management-System umfasst, neben einem Transportfahrzeug 30 im Ernteprozess bei der Aufnahme des auf dem Feld 29 liegenden Erntegutschwades X1 und der sich dem Ende einer Feldüberfahrt Z1 nähert, umdreht und am Anfang einer neuen Feldüberfahrt Z2 wieder in das Feld 29 einfährt, um dann den Erntegutschwad X2 aufzunehmen. Beispielhaft könnte nach Speicherung und Auswertung der vorab durch das Vorgewende-Management-System erfassten Daten folgender automatischer Vorgewende-Ablauf des Feldhäcksler 1 im Vorgewendesektor 31, der den Schleifvorgang zum Schleifen der Messer 11 umfasst, im Bordrechner 28 programmiert sein. Beim Erreichen des Vorgewendesektors 31 wird das Vorsatzgerät 7 angehoben. Die Drehzahl der Häckseltrommel 12 wird gesenkt. Beim Erreichen der für den Schleifvorgang benötigten Hackseltrommetdrehzahl aktiviert das Vorgewende-Management-System automatisch den Hauptmodus der Steuereinrichtung 25. Die Steuereinrichtung 25 bewirkt, dass der Antrieb 24 der Schleifvorrichtung 20 die Schleifsteinhalterung 22 aus einer Rauhe- bzw. Parkposition, in der sie seitlich neben der Häckseltrommel 12 angeordnet ist, über die Breite der Häckseltrommel 12 verschiebt. Dabei ist die Unterseite des Schleifsteins 21 in Kontakt mit den Messern 11 und schärft sie. Beim Schleifvorgang wird der Schleifstein 21 mehrfach über die Breite der Häckseltrommel 12 verfahren. Die Dauer des Schleifvorgangs ist variabel einstellbar. Der Schleifstein 21 wird nach Durchführung des Schteifprozesses in seine Parkposition verbracht, wobei die Steuerung so erfolgt, dass spätestens mit einem gewissen Zeitvorlauf vor dem Hochfahren der Häckseltrommeldrehzahl, die Steuereinrichtung 25 im Hilfsmodus betrieben wird, so dass die Schleifvorrichtung 20 bereits vor Erhöhung der Häckseitrommetdrehzahl in ihrer Ruhe- bzw. Parkposition verbracht und arretiert ist. Im Weiteren wird das Lenksystem automatisch gesteuert, um die Feldüberfahrt X1 zu verlassen und aus dem Feld 29 herauszufahren und zu drehen, um wieder in das Feld 29 in die Feldüberfahrt X2 hineinzufahren. Nach dem Umdrehen erfolgen die Operationen in nahezu umgekehrter Reihenfolge. Wenn der Feldhäcksler 1 den Anfang der Feldüberfahrt X2 erreicht hat, befindet sich das Vorsatzgerät 7 in Arbeitsbetriebsstellung, um den Erntegutschwad X2 aufnehmen zu können. Bei der nächsten Vorgewendefahrt kann der gleiche Ablauf oder ein geänderter Ablauf erfolgen Denkbar ist, dass der Schleifvorgang nicht automatisch während jeder Vorgewendefahrt durch das Vorgewende-Management-Sysiem aktiviert wird, sondern die Schleifzyklen durch den Bediener 27 festgelegt werden.

Neben der oben dargestellten Einbindung des Schleifprozesses in ein bestehendes Vorgewende-Management-System kann die Steuereinrichtung 25 den Antrieb 24 der Schleifvorrichtung 20 in Abhängigkeit eines Nichtarbeits- oder Arbeitsbetriebssignals ansteuern. Das Nichtarbeftsbetriebssignal kann dabei automatisch erfasst oder vorgegeben sein. Dazu ist der landwirtschaftlichen Erntemaschine 2 ein nicht näher dargestellter Sensor zugeordnet, der geeignet ist, festzustellen, ob sich die landwirtschaftliche Erntemaschine 2 im Arbeitsbetrieb oder Nichtarbeiisbeirieb befindet und geeignet ist, ein entsprechendes Signal zu generierten. Als geeignete Sensoren können eine oder mehrere an geeigneten Stellen der Erntemaschine 2 platzierte Bildkameras oder Laserscanner in Betracht kommen. Das von dem Sensor generierte Signal kann mittels geeigneter Leitungen der Steuereinrichtung 25 zugeführt werden. In Abhängigkeit von den generierten Signalen wird die Steuereinrichtung 25 im Haupt- bzw. im Hilfsmodus betrieben, wobei im Hilfsmodus mittels des Antriebs die Schleifvorrichtung 20 in eine vorgebare Grundstellung gebracht und fixiert wird und im Hauptmodus mittels des Antriebs 24 die Stellung der Schleifvorrichtung 20 so gesteuert bzw. geregelt wird, dass ein Schleifvorgang vollzogen wirt. Erfindungsgemäß wird die Steuereinrichtung 25 beim Vorliegen eines Nichtarbeitsbetriebssignals, beispielhaft während Rangierarbeiten oder während einer Pause, im Hauptmodus betrieben und demgegenüber wird die Steuereinrichtung 25 beim Vorliegen eines Arbeitsbetriebssignals im Hilfsmodus betrieben, so dass die Schleifivorrichtung in ihrer Parkposition verbracht und arretiert ist und damit ein störungsfreier Arbeitsbetrieb der landwirtschaftlichen Erntemaschine 2 während des Ernteprozesses gewährleistet ist. Dadurch können insgesamt die sich ohnehin während des Ernteprozesses ergebenden Nichtarbeitsbetriebszeiten der landwirtschaftlichen Erntemaschine 2 zum Schleifen der Häckselmesser 11 genutzt werden, so dass der Ernteprozess nicht zusätzlich zum Schleifen der Häckselmesser 11 unterbrochen werden muss und stetig geschärfte Messer 11 zur Verfügung stehen.

Damit sichergestellt ist, dass im Straßenverkehr kein anderer Teilnehmer, wie auch der Bediener 27 der landwirtschaftlichen Erntemaschine 2 selbst, durch den Schleifvorgang beeinträchtigt bzw. in seiner Aufmerksamkeit abgelenkt wird und dadurch Unfälle entstehen können, kann die Steuereinrichtung 25 nicht im Hauptmodus betrieben und, damit kein Schleifvorgang vollzogen werden, wenn sich die landwirtschaftliche Erntemaschine 2 im Straßenverkehr befindet. Vorzugsweise wird die Position der landwirtschaftlichen Erntemaschine 2 in an sich bekannter Weise mittels eines hier nicht dargestellten GPS-Systems ermittelt,

Es liegt im Rahmen des Könnens eines Fachmanns die beschriebene Erfindung in nicht dargestellter Weise abzuwandeln oder in anderen als den dargestellten Anwendungsfällen einzusetzen, um die beschriebenen Effekte zu erzielen, ohne dabei den Rahmen der Erfindung zu verlassen.

**Bezugszeichenliste**

| | | | |
|---|---|---|---|
| 1 | Selbstfahrender Feldhäcksler | X1 | Erntegutschwad |
| 2 | Landwirtschaftliche Erntemaschine | X2 | Erntegutschwad |
| 3 | Rahmen | Z1 | Feldüberfahrt |
| 4 | Rad | Z2 | Feldüberfahrt |
| 5 | Rad | | |
| 6 | Fahrerkabine | | |
| 7 | Vorsatzgerät | | |
| 8 | Erntegerät | | |
| 9 | Vorpresswalzen | | |
| 10 | Einzugswalzen | | |
| 11 | Messer. | | |
| 12 | Hackseltrommel | | |
| 13 | Gegenschneide | | |
| 14 | Nachzerkleinerungseinrichtung | | |
| 15 | Förderschacht | | |
| 16 | Nachbeschieuniger | | |
| 17 | Auswurfkrümmer | | |
| 18 | Ausvvurfkrümmerklappe | | |
| 19 | | | |
| 20 | Schieitvörrfchtung | | |
| 21 | Schleifstein | | |
| 22 | Schteifsteinhaiterung | | |
| 23 | Laufachse | | |
| 24 | Antrieb | | |
| 25 | Steuereinrichtung | | |
| 26 | Bedieneinrichtung | | |
| 27 | Bediener | | |
| 28 | Bordrechner | | |
| 29' | Feld | | |
| 30 | Transportfahrzeug | | |
| 31 | Vorgewendesektor | | |

## Patentansprüche

1. Landwirtschaftliche Erntemaschine (2), insbesondere ein selbstfahrender Feldhäcksler (1), mit einer Häckselmesser (11) aufweisenden Häckseltrommel (12), einer der Häckseltrommel (12) zugeordneten, mittels eines Antriebes (24) antreibbaren Schleifvorrichtung (20) mit einem Schlelfwerkzeug zum Schleifen der Häckselmesser (11), wobei ein Schleifvorgang zum Schleifen der Häckselmesser (11) aktiviert wird, wenn sich die landwirtschaftliche Erntemaschine (2) während des Ernteprozesses in einem Nichtarbeitsbetrieb befindet, **dadurch gekennzeichnet, dass** der Nichtarbeitsbetrieb die Vorgewende- beziehungsweise Feldendefahrt ist, wobei der Prozess zur Aktivierung des Schleifvorganges in ein elektronisches Vorgewende-Management-System integriert ist und wobei das elektronische Vorgewende-Management-System den Schleifvorgang automatisch aktiviert.

2. Landwirtschaftliche Erntemaschine (2) nach Anspruch 1, **dadurch gekennzeichnet, dass** eine Steuereinrichtung (25) zur Steuerung des Antriebes (24) der Schleifvorrichtung (20) vorhanden ist, wobei die Steuereinrichtung (25) den Antrieb (24) der Schleifvorrichtung (20) in Abhängigkeit eines Nichtarbeitsbetriebs- oder Arbeitsbetriabssignals ansteuert.

3. Landwirtschaftliche Erntemaschine (2) nach Anspruch 2, **dadurch gekennzeichnet, dass** das Nichtarbeitsbetriebs- bzw. das Arbeitsbetriebssignal automatisch erfasst bzw. vorgegeben wird.

4. Landwirtschaftliche Erntemaschine (2) nach Anspruch 2, **dadurch gekennzeichnet, dass** die Steuereinrichtung (25) in einem Hilfsmodus oder In einem Hauptmodus betrieben wird, wobei im Hilfsmodus mittels des Antriebes (24) die Schleifvorrichtung (20) in eine vorgebbare Grundstellung verbracht und fixiert wird und im Hauptmodus mittels des Antriebes (24) die Stellung der Schleifvorrichtung (20) gesteuert bzw. geregelt wird.

5. Landwirtschaftliche Erntemaschine (2) nach Anspruch 4, **dadurch gekennzeichnet, dass** die Steuereinrichtung (25) beim Vorliegen eines Nichtarbeitsbetriebssignals, insbesondere während eines Rangier- oder Pausenbetriebes, im Hauptmodus betrieben wird.

6. Landwirtschaftliche Erntemaschine (2) nach Anspruch 4, **dadurch gekennzeichnet, dass** die Steuereinrichtung (25) beim Vorliegen eines Arbeitsbetriebssignals im Hilfsmodus betrieben wird.

7. Landwirtschaftliche Erntemaschine (2) nach Anspruch 4, **dadurch gekennzeichnet, dass** die Steuereinrichtung (25) nicht im Hauptmodus betrieben werden kann, wenn sich die landwirtschaftliche Erntemaschine (2) im Straßenverkehr befindet.

8. Landwirtschaftliche Erntemaschine (2) nach Anspruch 4, **dadurch gekennzeichnet, dass** der Ablauf des Hauptmodus und/oder des Hilfsmodus der Steuereinrichtung (25) vorgegeben wird oder durch den Bediener frei programmierbar ist.

9. Landwirtschaftliche Erntemaschine (2) nach Anspruch 2, **dadurch gekennzeichnet, dass** ein mit der Steuereinrichtung (25) verbundener Sensor auf der landwirtschaftlichen Erntemaschine (2) angeordnet ist, wobei der Sensor geeignet ist zu erkennen, ob sich die landwirtschaftliche Erntemaschine (2) während des Ernteprozesses in einem Arbeits- oder einem Nichtarbeitsbetrieb befindet und entsprechend ein Arbeitsbetriebs- oder ein Nichtarbeitsbetriebssignal generiert.

10. Landwirtschaftliche Erntemaschine (2) nach Anspruch 9, **dadurch gekennzeichnet, dass** der Sensor als Bildkamera und/oder als Laserscanner ausgeführt Ist.

## Claims

1. An agricultural harvesting machine (2), in particular a self-propelled forage harvester (1), comprising a chopping drum (12) having chopping blades (11), a sharpening device (20) which is associated with the chopping drum (12) and is drivable by means of a drive (24) and having a sharpening tool for sharpening the chopping blades (11), wherein a sharpening operation for sharpening the chopping blades (11) is activated when the agricultural harvesting machine (2) is in a non-working mode during the harvesting process, **characterised in that** the non-working mode is the headland or field end travel, whereby the process for activation of the sharpening operation is integrated in an electronic headland management system and wherein the electronic headland management system activates the sharpening operation.

2. An agricultural harvesting machine (2) according to claim 1 **characterised in that** there is a control device (25) for controlling the drive (24) of the sharpening device, wherein the control device (25) actuates the drive (24) of the sharpening device (20) in dependence on a non-working mode or working mode signal.

3. An agricultural harvesting machine (2) according to claim 2 **characterised in that** the non-working or the working mode signal is automatically detected or predetermined.

4. An agricultural harvesting machine (2) according to claim 2 **characterised in that** the control device (25) is operated in an auxiliary mode or in a main mode, wherein in the auxiliary mode the sharpening device (20) is moved into and fixed in a predeterminable basic position by means of the drive (24) and in the main mode the position of the sharpening device (20) is open-loop or closed-loop controlled by means of the drive (24).

5. An agricultural harvesting machine (2) according to claim 4 **characterised in that** the control device (25) is operated in the main mode when there is a non-working mode signal, in particular during a manoeuvring or pause mode.

6. An agricultural harvesting machine (2) according to claim 4 **characterised in that** the control device (25) is operated in the auxiliary mode when there is a working mode signal.

7. An agricultural harvesting machine (2) according to claim 4 **characterised in that** the control device (25) cannot be operated in the main mode when the agricultural harvesting machine (2) is in on-road travel.

8. An agricultural harvesting machine (2) according to claim 4 **characterised in that** the procedure of the main mode and/or the auxiliary mode of the control device (25) is predetermined or can be freely programmed by the operator.

9. An agricultural harvesting machine (2) according to claim 2 **characterised in that** a sensor connected to the control device (25) is arranged on the agricultural harvesting machine (2), wherein the sensor is suitable for detecting whether the agricultural harvesting machine (2) is in a working or a non-working mode during the harvesting process and accordingly generates a working mode or a non-working mode signal.

10. An agricultural harvesting machine (2) according to claim 9 **characterised in that** the sensor is in the form of an image camera and/or a laser scanner.

## Revendications

1. Machine agricole de récolte (2), en particulier une ensileuse automotrice (1), comprenant un rotor de hachage (12) pourvu de couteaux de hachage (11), un dispositif d'affûtage (20) associé au rotor de hachage (12), apte à être entraîné au moyen d'un entraînement (24) et muni d'un outil d'affûtage pour affûter les couteaux de hachage (11), une opération d'affûtage pour affûter les couteaux de hachage (11) pouvant être activée lorsque, durant le processus de récolte, la machine agricole de récolte (2) se trouve dans un mode de non-travail, **caractérisée en ce que** le mode de non-travail est le passage en tournière, respectivement en bout de champ, selon lequel le processus d'activation de l'opération d'affûtage est intégré à un système électronique de gestion de tournières, le système électronique de gestion de tournières actionnant l'opération d'affûtage.

2. Machine agricole de récolte (2) selon la revendication 1, **caractérisée en ce qu'**un dispositif de commande (25) est prévu pour commander l'entraînement (24) du dispositif d'affûtage (20), le dispositif de commande (25) commandant l'entraînement (24) du dispositif d'affûtage (20) en fonction d'un signal de mode de non-travail ou de mode de travail.

3. Machine agricole de récolte (2) selon la revendication 2, **caractérisée en ce que** le signal de mode de non-travail, respectivement de mode de travail est détecté, respectivement prescrit automatiquement.

4. Machine agricole de récolte (2) selon la revendication 2, **caractérisée en ce que** le dispositif de commande (25) est exploité dans un mode auxiliaire ou dans un mode principal, dans le mode auxiliaire le dispositif d'affûtage (20) étant amené dans une position de base prescriptible et immobilisé au moyen de l'entraînement (24) et, dans le mode principal, la position du dispositif d'affûtage (20) étant commandée, respectivement régulée au moyen de l'entraînement (24).

5. Machine agricole de récolte (2) selon la revendication 4, **caractérisée en ce que**, en présence d'un signal de mode de non-travail, en particulier pendant un fonctionnement en manoeuvre ou en pause, le dispositif de commande (25) est exploité en mode principal.

6. Machine agricole de récolte (2) selon la revendication 4, **caractérisée en ce que**, en présence d'un signal de mode de travail, le dispositif de commande (25) est exploité en mode auxiliaire.

7. Machine agricole de récolte (2) selon la revendication 4, **caractérisée en ce que** le dispositif de commande (25) ne peut pas être exploité en mode principal lorsque la machine agricole de récolte (2) circule sur route.

8. Machine agricole de récolte (2) selon la revendication 4, **caractérisée en ce que** le déroulement du mode principal et/ou du mode auxiliaire du dispositif de commande (25) est prescrit ou librement programmable par l'utilisateur.

9. Machine agricole de récolte (2) selon la revendication 2, **caractérisée en ce qu'**un capteur relié au dispositif de commande (25) est disposé sur la machine agricole de récolte (2), le capteur étant apte à détecter si, durant le processus de récolte, la machine agricole de récolte (2) se trouve dans un mode de travail ou dans un mode de non-travail et génère par conséquent un signal de mode de travail ou un signal de mode de non-travail.

10. Machine agricole de récolte (2) selon la revendication 9, **caractérisée en ce que** le capteur est conformé en caméra et/ou en scanner laser.
